(19) **Europäisches Patentamt European Patent Office Office européen des brevets**

(11) **EP 2 525 162 B1**

(12) **EUROPEAN PATENT SPECIFICATION**

(45) Date of publication and mention
of the grant of the patent:
**17.07.2013  Bulletin 2013/29**

(51) Int Cl.:
***F24J 2/48*** *(2006.01)*

(21) Application number: **11166762.2**

(22) Date of filing: **19.05.2011**

(54) **A solar thermal absorber material**

Solar-thermisches Absorptionsmaterial

Matériau absorbant de type thermique solaire

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**21.11.2012  Bulletin 2012/47**

(73) Proprietor: **Sandvik Intellectual Property AB
811 81 Sandviken (SE)**

(72) Inventors:
• **Sjöblom, Gustaf
S-802 55, Gävle (SE)**
• **Hoel, Anders
S-802 75, Gävle (SE)**

• **Stenström, Mikael
S-812 30, Storvik (SE)**

(56) References cited:
**EP-A1- 1 217 315     EP-A1- 2 253 737
DE-A1- 2 811 393**

• **ZHANG Q-C: "Recent progress in high-
temperature solar selective coatings", SOLAR
ENERGY MATERIALS AND SOLAR CELLS,
ELSEVIER SCIENCE PUBLISHERS,
AMSTERDAM, NL, vol. 62, no. 1-2, 1 April 2000
(2000-04-01), pages 63-74, XP004195297, ISSN:
0927-0248, DOI: 10.1016/S0927-0248(99)00136-1**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

TECHNICAL FIELD

The present invention relates to a solar thermal absorber material according to the preamble of claim 1.

BACKGROUND

Solar thermal absorbers are typically used in household applications for converting sunlight into heat. These absorbers are usually referred to as "low temperature flat plate absorbers" as the typical operating temperature is below 400°C. A solar thermal absorber typically comprises a plate-like substrate of heat conductive metal such as copper, steel or aluminium. Fluid conducting tubes are attached to one side of the metallic plate, the inner side thereof, whereas the outer side of the plate is coated with a thin dark surface coating. The properties of the dark coating are such that the coating reflects very little of incident sunlight. Therefore, when the dark surface coating is exposed to sunlight it absorbs heat from the sunlight and thereby heats the metallic plate. The heat is transferred from the metallic plate to a fluid, for example water, which circulates in the tubes on the rear side of the plate. The heated fluid can be used in various household heating applications, such as heating of tap water. Typically, solar thermal absorbers of this type are enclosed in box-like protective housings comprising a transparent window and are arranged on the roofs of buildings.

In a known material for solar thermal absorbers the dark coating is a multilayer structure having layers of $Al_2O_3$, $SiO_2$, Mo, $SiO_2$, Mo, $SiO_2$ in order from the substrate. The multilayer structure is applied onto a metallic strip substrate of copper, stainless steel or aluminium.

EP-A-1 217 315 discloses a solar thermal absorber material according to the preamble of claim 1.

Although proven effective, this known type of solar thermal absorber material has occasionally exhibited low resistance against high temperatures and moisture induced corrosion. For example, moisture induced corrosion has occurred on solar absorbers based on copper substrate having the above mentioned multilayer structure. Solar absorbers of the above type that are based on aluminium substrates have somewhat better corrosion resistance than the ones comprising a copper substrate but does not have satisfactory heat resistance. Therefore, when the above types of solar absorbers are exposed for long periods to warm and humid weather conditions the properties of the absorbers tend to deteriorate, which shortens the service life of the absorbers.

It is therefore an object of the present invention to provide a solar thermal absorber material which is resistant to heat and corrosion.

SUMMARY OF THE INVENTION

This object is achieved by a solar thermal absorber material comprising:

a multilayer structure for absorbing solar light;
a metallic substrate for conducting heat from said multilayer structure, characterized in that said multilayer structure, in order from said substrate, at least comprises:

a first layer of $Al_2O_3$;
a second layer of Mo;
a third layer of $Al_2O_3$;
a fourth, uppermost, layer of $SiO_2$,

The inventive solar thermal absorber material has very high resistance to moisture induced corrosion and high temperatures.

The "heat resistance" of a solar absorber material is in general the ability of the material to withstand high temperatures without losing its heat retaining capacity or having the layer structure crack or delaminating from the substrate.

In the inventive solar thermal absorber material, the resistance to heat, and also to some extent the resistance to moisture-induced corrosion, is believed to be influenced by the fact that the alternating layers of aluminium oxide ($Al_2O_3$) and molybdenum (Mo) molybdenum have similar thermal expansion coefficients.

When the inventive absorber material is heated, the layers of $Al_2O_3$ and Mo expand uniformly and substantially no strain or tension forms in the layer structure which otherwise would have caused the layer structure to break and to delaminate from the substrate.

Corrosion in solar absorbers is generally caused by moisture from the atmosphere around the solar absorber that penetrates through the multilayer structure down to the metallic substrate and form oxides/hydroxides thereon. The oxides/hydroxides deteriorate the adhesion between the multilayer structure and the substrate which causes the multilayer structure to delaminate from the substrate.

The high resistance to corrosion in the inventive material is believed to be caused by the following factors:

As described above, the alternating layers of $Al_2O_3$ and Mo in the inventive material have similar thermal expansion coefficients. When these layers are heated they expand uniformly and therefore strain and tension is avoided in the layer structure which otherwise could have caused cracks through which moisture can penetrate down to the substrate.

The outermost layer of the inventive multilayer structure is a layer of $SiO_2$. It is believed that the layer of $SiO_2$ absorbs moisture and therefore prevents moisture from penetrating through the underlying layers of $Al_2O_3$ and Mo to the surface of the metallic substrate. Even though the thermal expansion coefficient of $SiO_2$ is different from the thermal expansion coefficient of Mo and $Al_2O_3$ tensions does not build up in the multilayer structure when the structure is heated since the $SiO_2$ layer is the outermost layer.

In the inventive multilayer structure it is important that the outermost $SiO_2$ layer is applied directly onto an underlying $Al_2O_3$ layer. The reason therefore is that $SiO_2$ and $Al_2O_3$ have similar refraction index. Therefore the optical properties of the multilayer structure, i.e. the ratio of absorptance/emittance are not negatively influenced to a significant extent by the $SiO_2$ layer. This could otherwise have been the case if the $SiO_2$ layer was applied onto another layer than $Al_2O_3$, for instance Mo.

According to one embodiment, the multilayer structure defined above comprises:

a first layer (100) of $Al_2O_3$ having a thickness of 28 - 89 nm;
a second layer (200) of Mo having a thickness of 16 - 30 nm;
a third layer (300) of $Al_2O_3$ having a thickness of 39 - 74 nm;
an uppermost layer (700) of $SiO_2$ having a thickness of 39 - 74 nm;

wherein the thickness of the layers is selected such that the ratio of absorptance/emittance is $\geq 80/\leq 20$.

According to a first preferred embodiment, the multilayer structure has the following configuration, preferably with layer thicknesses as indicated:

a first layer of $Al_2O_3$ having a thickness of 10 - 240 nm;
a second layer of Mo having a thickness of 8 - 120 nm;
a third layer of $Al_2O_3$ having a thickness of 25 - 105 nm;
a forth layer of Mo having a thickness of 3-60 nm;
a fifth layer of $Al_2O_3$ having a thickness of 15-100 nm;
a sixth, uppermost, layer of $SiO_2$ having a thickness of 10 - 160 nm, wherein

the thickness of each layer is selected in the stated intervals such that the ratio of absorptance/emittance is >90%/<10% for solar thermal absorber material.

The described inventive multilayer structure comprises a large number of layers, in total five alternating layers of $Al_2O_3$ and Mo and the sixth layer of $SiO_2$. The high number of layers has a positive effect on the corrosion resistance for the following reason:

In a multilayer structure, defects, such as grain boundaries or micro cracks, in each individual layer may line up and form a passage for moisture through the layer structure. However, the probability that the defects in the individual layers line up to form a passage decreases with the number of individual layers in the structure. In other words, a defect in one layer is sealed by an adjacent layer.

In order to achieve an even higher number of layers in the inventive multilayer structure without compromising the optical properties of the absorber, the middlemost $Al_2O_3$ layer could be formed by two individual $Al_2O_3$ layers, which are applied next to each other. The effect thereof is that a large number of layers are achieved in the multilayer structure which provides for good protection against moisture penetration. However, from an optical perspective the two adjacent $Al_2O_3$ layers only constitute one $Al_2O_3$ layer and do therefore not alter the optical properties of the solar thermal material.

It is therefore preferred that the multilayer structure has the following configuration, preferably with layer thicknesses as indicated:

a first layer of $Al_2O_3$ having a thickness of 10 - 240 nm;
a second layer of Mo having a thickness of 8 - 120 nm;

a third layer of $Al_2O_3$;
a fourth layer of $Al_2O_3$;
wherein the total thickness of said third and fourth layer is 25 - 105 nm;
a fifth layer of Mo having a thickness of 3-60 nm;
a sixth layer of $Al_2O_3$ having a thickness of 15-100 nm;
a seventh, uppermost, layer of $SiO_2$ having a thickness of 10 - 160 nm,

wherein the thickness of each layer is selected in the stated intervals such that the ratio of absorptance/emittance is >90%/<10% for the solar thermal absorber material.

In order to further minimize, or even eliminate, the effect that the $SiO_2$ layer has on the optical properties of the multilayer structure it is preferred to adapt the thicknesses of the $SiO_2$ layer and the underlying $Al_2O_3$ layer to each other. As mentioned above, the refraction indexes of $Al_2O_3$ and $SiO_2$ are similar. However, for all wavelengths the refraction index of $Al_2O_3$ is slightly higher than that of $SiO_2$. To compensate for this difference the $SiO_2$ layer should preferably be thicker than the $Al_2O_3$ layer. Since the specific refraction indexes of $Al_2O_3$ and $SiO_2$ varies with the wavelength, the precise relationship between thicknesses of the layers has to be determined by the skilled person. For example if the $SiO_2$ layer has a thickness of 50 nm, the underlying $Al_2O_3$ layer should have a thickness of 45 nm for maintaining the desired optical properties of the solar thermal absorber material.

In order to achieve very good corrosion resistance, thick layers could be provided in the multilayer structure. The maximum thickness of the layers should however be limited in order to prevent that thermal expansion cause tension and strain in the multilayer structure. The optical properties, i.e absorptance and emittance, will also deteriorate if the total thickness of the layer structure become too large. If the total thickness of the multilayer structure exceeds 300 nm less light will be reflected from the substrate back into the multilayer structure and therefore the emittance will increase and the absorptance decrease.

The layers or some of the layers in the inventive multilayer structure could be made very thin. The advantage thereof is that a good compromise between absorptance and emittance is obtained. However, it is difficult to achieve very thin coherent layers and the minimum thickness of the layers should therefore be limited in order to secure that all layers of the inventive multilayer structure are intact and fully closed coalesced thin films.

According to a third preferred embodiment, the layers in the inventive multilayer structure may have the following thicknesses:

the first layer of $Al_2O_3$, a thickness of 45-100 nm;
the second layer of Mo, a thickness of 15 - 33 nm;
the third layer and the fourth layer (400) of $Al_2O_3$, a total thickness 38 - 83 nm;
the fifth layer of Mo, a thickness of 8 - 16 nm;
the sixth layer of $Al_2O_3$, a thickness of 34 - 75 nm;
the seventh layer of $SiO_2$, a thickness of 38 - 83 nm.

A solar thermal absorber material comprising this multilayer structure has a robust coherent multilayer structure which provides for good corrosion resistance and good thermal stability.

The thickness of the Mo layers in the multilayer structure may be selected such that the first Mo layer is twice as thick as the second Mo layer. Thereby a gradient having a low metal fraction towards the surface is obtained in the layer structure. It is preferred to have a metal gradient through the layer structure for the following reason: The solar absorber material shall absorb as much solar light as possible and it is therefore preferred that it in total contains a high fraction of metal. However, close to the surface of the solar absorber the fraction of metal shall be low in order to not influence the refraction index of the layer structure.

Preferably the thicknesses of the layers according to this alternative are selected such that:

the first layer of $Al_2O_3$ having a thickness of 60 nm;
the second layer of Mo having a thickness of 12 - 42 nm;
the third layer and the fourth layer of $Al_2O_3$ having a total thickness of 50 nm;
the fifth layer of Mo having a thickness of 6 - 21 nm;
the sixth layer of $Al_2O_3$ having a thickness of 45 nm;
the seventh layer of $SiO_2$ having a thickness of 50 nm;

According to a fourth preferred embodiment the solar thermal absorber material comprises a multilayer structure having the following layer thicknesses:

the first layer of $A_2O_3$ has a thickness of 60 nm;

the second layer of Mo has a thickness of 20 nm;
the third layer and the fourth layer of $Al_2O_3$ has a total thickness of 50 nm;
the fifth layer of Mo has a thickness of 10 nm;
the sixth layer of $Al_2O_3$ has a thickness of 75 nm;
the seventh layer of $SiO_2$ has a thickness of 50 nm.

Preferably the sixth layer of $Al_2O_3$ has a thickness of 45 nm.

The metallic substrate of the inventive solar thermal absorber is preferably selected from copper strip, aluminium strip or stainless steel strip. Such materials have good thermal conductivity and are therefore suitable for use in solar thermal absorbers. Copper and aluminium strip further exhibits adequate reflectance property which is essential for providing low emittance properties in the inventive solar absorber material.

DESCRIPTION OF DRAWINGS

Figure 1: A schematic drawing of a cross section through the inventive solar thermal absorber material according to a preferred embodiment.

Figure 2a and 2b shows the reflectance responses of heat treated samples of G2 SS $SiO_2$, G2 Cu $SiO_2$ and an untreated reference sample G2 SS $SiO_2$ ref, G2 SS $SiO_2$ ref.

Figure 3a and 3b show absorptance $\alpha_s$ and emittance $\varepsilon_t$ upon heat treatment for samples G2 SS $SiO_2$, G2 Cu $SiO_2$ and reference samples G2 SS $SiO_2$ ref, G2 SS $SiO_2$ ref and samples of G2 Cu/SS.

Figure 3c shows the performance criterion for heat treated samples of figures 3a and 3b.

Figure 4a show the reflectance response from samples of G2 SS $SiO_2$ and an untreated reference sample G2 SS $SiO_2$ ref that were subjected to condensation treatment.

Figure 4b show the reflectance response after condensation treatment from samples of G2 SS that have the same multilayer structure as the samples in figure 4a but without a $SiO_2$ layer. Figure 4b also shows the reflectance response from an untreated reference sample G2 SS ref.

Figure 4c show the reflectance response from samples of G2 Cu $SiO_2$ and an untreated reference sample G2 Cu $SiO_2$ ref that were subjected to condensation treatment.

Figure 4d show the reflectance response after condensation treatment from samples of G2 Cu that have the same multilayer structure as the samples in figure 4c but without a $SiO_2$ layer. Figure 4d also shows the reflectance response from an untreated reference sample G2 Cu ref.

Figure 5a and 5b show absorptance $\alpha_s$ and emittance $\varepsilon_t$ upon condensation testing for samples G2 SS $SiO_2$, G2 Cu $SiO_2$ and reference samples G2 SS $SiO_2$ ref, G2 SS $SiO_2$ ref and samples G2 Cu/SS.

Figure 5c shows the performance criterion for the samples of figure 5a and 5b subjected to condensation test.

DESCRIPTION OF EMBODIMENTS

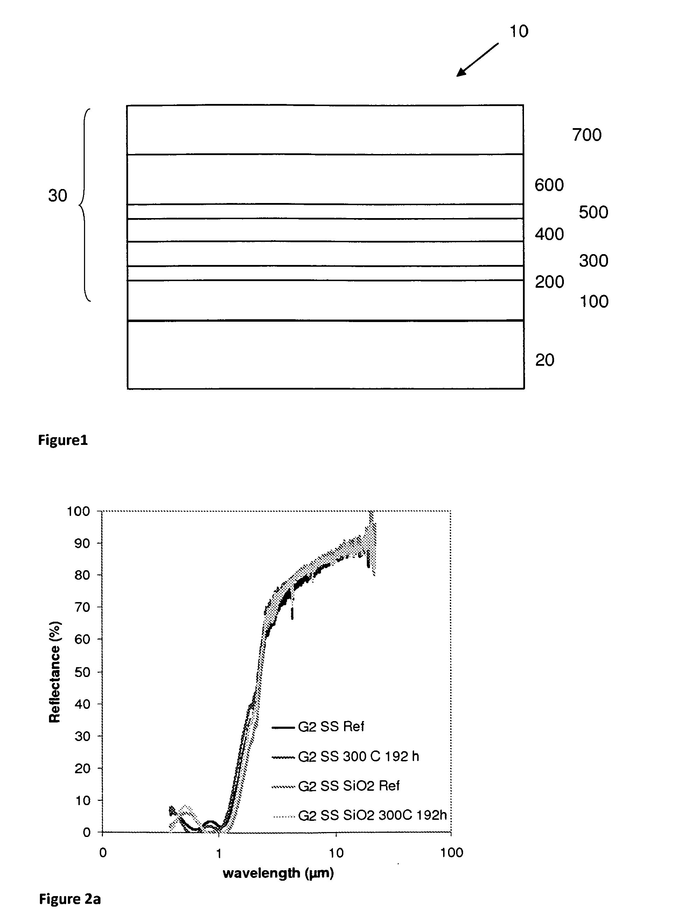

Figure 1 shows the inventive solar thermal absorber material according to a preferred embodiment. The solar thermal absorber material 10 comprises a substrate 20 which is made of strip of metallic material, preferably copper, aluminium or stainless steel, for example of the sort 15R10. The substrate 20 may have a thickness of 0,1-0,4 mm. and its length and width are adapted for the actual application.

A multilayer structure 30 is applied onto the substrate. The multilayer structure has the following configuration: closest to the substrate is a layer 100 of aluminium oxide ($Al_2O_3$) thereafter a second layer 200 of Molybdenum (Mo) onto which a third and a fourth layer 300, 400 of $Al_2O_3$ are applied. Thereafter the multilayer comprises a fifth layer 500 of Mo, a sixth layer 600 of $Al_2O_3$ and a seventh 700, outermost layer of $SiO_2$.

The inventive solar thermal absorber material is manufactured by coating a strip material with layers of $Al_2O_3$, Mo and $SiO_2$ using physical vapour deposition (PVD) in a continuous roll-to-roll process. Preferably, the surface of the strip material is ion-etched prior to coating in order to provide good adhesion between the multilayer structure and the surface of the strip material.

Preferably the thicknesses of the individual layers in the inventive solar absorber material should be: layer 100 of $Al_2O_3$: 10-240 nm; layer 200 of Mo: 8-120 nm; layer 300 of $Al_2O_3$: 25-50 nm; layer 400 of $Al_2O_3$: 25-50; layer 500 of Mo: 3-60; layer 600 of $Al_2O_3$: 15-45 nm; layer 700 of $SiO_2$: 10-50 nm.

The thicknesses of each individual layer should be selected to be within the stated intervals such that the ratio of absorptance/emittance of the solar thermal absorber material is $\geq 90\%/\leq 10\%$ for the selected substrate.

The ratio between the absorptance/emittance of the solar absorber is a measure on the thermal efficiency of the solar absorber. It is desired to have as high absorptance as possible since as much sunlight as possible shall be absorbed and transferred as heat to the substrate. However in operation, the solar absorber heats up and start to radiate heat. The radiated heat is measured as emittance and can be considered a heat loss from the solar absorber. It is generally accepted that an efficient commercial solar absorber should have an absorptance/emittance ratio of $\geq 90\%/\leq 10\%$ at its operation temperature. However, an thermal solar absorber having an absorptance/emittance ratio of $\geq 80\%/\leq 20\%$ is also fully functional.

It is believed that the ratio of absorptance/emittance is influenced by the material in the individual layers and the infra-red properties of the substrate. For example a high fraction of metal in the layer structure has a positive effect on the absorptance. Although no explanation can be given it is further believed that the thicknesses of the individual layers also are of importance for the absorptance/emittance ratio of the solar absorber material.

The individual layer thicknesses of the inventive solar absorber material according to the above described embodiment were determined from simulations performed using the computer program TS-Calc Thinfilm by Software Specta Inc. In the simulation an initial layer structure was entered in the program. The initial layer structure had the thicknesses:

Layer 1 $Al_2O_3$: 60 nm; Layer 2 Mo: 20 nm, layer 3 and 4 $Al_2O_3$: 50 nm in total; Layer 5 Mo: 10 nm; Llayer 6 $Al_2O_3$: 45 nm; Layer 7 $SiO_2$: 50 nm.

Thereafter the thickness of each individual layer was varied to determine the maximum and minimum thickness of each layer under the condition that an absorptance/emittance ratio of $\geq 90\%/\leq 10\%$ was maintained. Table 1 shows the results of the simulation.

Table 1: Results from simulation in TS-Calc on seven layer structure

| Layer 1 | Layer 2 | Layer 3/4 | Layer 5 | Layer 6 | Layer 7 | |
|---|---|---|---|---|---|---|
| $Al_2O_3$ | Mo | $Al_2O_3$/ $Al_2O_3$ | Mo | $Al_2O_3$ | $SiO_2$ | Absorptance/ Emittance |
| **240** | 20 | 50 | 10 | 45 | 50 | $\geq 90\%/\leq 10\%$ |
| **10** | 20 | 50 | 10 | 45 | 50 | $\geq 90\%/\leq 10\%$ |
| 60 | **120** | 50 | 10 | 45 | 50 | $\geq 90\%/\leq 10\%$ |
| 60 | **8** | 50 | 10 | 45 | 50 | $\geq 90\%/\leq 10\%$ |
| 60 | 20 | **105** | 10 | 45 | 50 | $\geq 90\%/\leq 10\%$ |
| 60 | 20 | **25** | 10 | 45 | 50 | $\geq 90\%/\leq 10\%$ |
| 60 | 20 | 50 | **20** | 45 | 50 | $\geq 90\%/\leq 10\%$ |
| 60 | 20 | 50 | **3** | 45 | 50 | $\geq 90\%/\leq 10\%$ |
| 60 | 20 | 50 | 10 | **100** | 50 | $\geq 90\%/\leq 10\%$ |
| 60 | 20 | 50 | 10 | **15** | 50 | $\geq 90\%/\leq 10\%$ |
| 60 | 20 | 50 | 10 | 45 | **160** | $\geq 90\%/\leq 10\%$ |
| 60 | 20 | 50 | 10 | 45 | **10** | $\geq 90\%/\leq 10\%$ |

In the described embodiment above, the layer structure has six layers of $Al_2O_3$ and

Mo and a seventh layer of $SiO_2$. However, simulations in TS-Calc have shown that a functional solar thermal absorber having an absorptance/emittance ratio of $\geq 80\%/\leq 20\%$ may be achived with a multilayer structure having first layer 100 of $Al_2O_3$, a second layer 200 of Mo, a third layer 300 of $Al_2O_3$ and an uppermost, layer of $SiO_2$. The simulations were performed as described above with a starting structure of:

Layer 1 $Al_2O_3$: 60 nm; Layer 2 Mo: 20 nm, Layer 3 of $Al_2O_3$: 50 nm and the outermost $SiO_2$ layer 50 nm.

The layers were varied under the condition that the absorptance/emittance ratio should be ≥80%/≤20%. Table 2 shows the results of the simulation.

Table 2: Results from simulation in TS-Calc on three layer structure.

| Layer 1 | Layer 2 | Layer 3 | Layer 4 | Absorptance/Emittance |
|---|---|---|---|---|
| $Al_2O_3$ | Mo | $Al_2O_3$ | $SiO_2$ | ≥80%/≤20% |
| 28 | 16 | 39 | 39 | ≥80%/≤20% |
| 36 | 16 | 41 | 41 | ≥80%/≤20% |
| 44 | 17 | 42 | 43 | ≥80%/≤20% |
| 51 | 18 | 45 | 45 | ≥80%/≤20% |
| 57 | 19 | 48 | 48 | ≥80%/≤20% |
| 63 | 21 | 53 | 53 | ≥80%/≤20% |
| 66 | 22 | 55 | 55 | ≥80%/≤20% |
| 69 | 23 | 58 | 58 | ≥80%/≤20% |
| 73 | 24 | 61 | 61 | ≥80%/≤20% |
| 77 | 26 | 64 | 64 | ≥80%/≤20% |
| 80 | 27 | 67 | 67 | ≥80%/≤20% |
| 84 | 28 | 70 | 70 | ≥80%/≤20% |
| 89 | 30 | 74 | 74 | ≥80%/≤20% |

Above specific layer thicknesses that yield solar thermal absorbers having acceptable absorptance/emittance ratios have been disclosed. However it is obvious that the skilled person, within the defined ranges, can determine other layer thicknesses that are suitable for a certain type of application of the solar thermal absorber The skilled person may determine these values by simulations as described above or by practical experiments as described below.

DESCRIPTION OF AN EXAMPLE

The inventive solar thermal absorber material will in the following be described in detail in with reference to tests that have been performed on samples of the inventive solar thermal material.

Samples of the inventive solar thermal absorber material were produced by coating strip substrates of stainless steel (SS) of the type 15R10 and copper (Cu) with the inventive multilayer structure in a continuous roll-to-roll PVD coating line. These samples were denominated G2 SS Si02 and G2 Cu Si02. The targeted thicknesses for the individual layers of the multilayer structure were as follows (from the substrate): $Al_2O_3$ (60 nm), Mo (20 nm), $Al_2O_3$ (25 nm), $Al_2O_3$ (25 nm), Mo (10 nm), $Al_2O_3$ (75 nm) and finally $SiO_2$ (50 nm).

For determining the effect of the $SiO_2$ layer, two sets of samples G2 Cu and G2 SS with were produced. These samples have the above layer structure but without $SiO_2$ layer. The thicknesses of the layers were determined in SEM (Scanning Electron Microscope). Table 2 shows the total set of samples that were produced.

Table 3: Test samples

| Sample Id | Thickness (nm) $Al_2O_3$ /Mo/$Al_2O_3$ / $Al_2O_3$ /Mo/$Al_2O_3$ /$SiO_2$ |
|---|---|
| G2 SS Si02 | 60/20/25/25/10/75/50 |
| G2 Cu Si02 | 60/20/25/25/10/75/50 |
| G2 SS | 60/20/25/25/10/75 |
| G2 Cu | 60/20/25/25/10/75 |

Some samples of each material were put aside as reference material. These materials are in the following referred to as G2 SS SiO$_2$ ref, G2 Cu SiO$_2$ ref and G2 SS ref, G2 Cu ref. These samples were not subjected to any treatment

Other samples of each material were subjected to a heat test and a condensation test respectively. The heat test and the condensation test simulate accelerated climate influence on the chemical behaviour and optical properties of the samples. Therefore these tests are good measures on the ability of the material to resist heat and corrosion for prolonged periods of time.

Heat test

The heat test is a measure on the ability of the inventive solar thermal absorber material to resist high temperatures. In the heat test, samples of each type (G2 SS SiO$_2$, G2 Cu SiO$_2$ and G2 SS, G2 Cu) were placed in a closed oven (containing non-circulating hot air) at 240°C (Cu) and 300°C (SS). The reduced temperature for Cu was chosen from experience indicating a generally lower resistance towards heat compared to SS. All samples were treated for a duration of 192 hours.

Condensation test

The condensation test is a measure of the corrosion resistance of the inventive solar thermal absorber material. In the condensation test, samples of each type (G2 SS SiO$_2$, G2 Cu SiO$_2$ and G2 SS, G2 Cu) were held ~5 cm above the water surface in a pot of boiling water (municipal, not deionized) held at 95°C. Water vapour was condensed onto the samples at a sample temperature of about 45°C. Times of treatment were 30 min, 60 min and 120 min.

Optical characterization method

After heat treatment and condensation testing, the long term stability of the optical performance on $\alpha_s$ (absorptance) and $\varepsilon_t$ (emittance) of the samples was determined. The optical performance is a measure on how much the absorptance $\alpha_s$ and emittance $\varepsilon_t$ of the treated samples has changed in comparison to untreated reference samples.

The samples, treated and untreated, were investigated with a Carl Zeiss CORONA Plus VIS-NIR dual-beam spectrometer in the wavelength interval 0.38 to 2.15 $\mu$m and a Bruker 27 FTIR spectrometer for wavelengths in the span 2.5 - 24 $\mu$m. The obtained data is defined as reflectance $R(\lambda)$ and furthermore used in the evaluation equations of solar absorptance (1) and thermal emittance (2) below.

The normal solar absorptance, $\alpha_s$, is weighted with the solar spectral radiation, $I_s(\lambda)$, and is defined by

$$\alpha_s = \frac{\int_{\lambda_1}^{\lambda_2}(1-R(\lambda))I_s(\lambda)d\lambda}{\int_{\lambda_1}^{\lambda_2}I_s(\lambda)d\lambda} \qquad (1)$$

The solar spectral radiation, $I_s(\lambda)$, is defined in the wavelength range from 0.3 - 4.1 $\mu$m. The data obtained from the Carl Zeiss spectrometer is therefore extrapolated for wavelengths between 0.30 and 0.38 $\mu$m.

The total normal thermal emittance, $\varepsilon_t$, is weighted with the blackbody spectrum, $I_{Bb}(\lambda,T)$, for a given temperature $T$ (Normally $T$ is chosen to be 373 K). The emittance is defined by

$$\varepsilon_t = \frac{\int_{\lambda_1}^{\lambda_2}(1-R(\lambda))I_{Bb}(\lambda,T)d\lambda}{\int_{\lambda_1}^{\lambda_2}I_{BB}(\lambda,T)d\lambda} \qquad (2)$$

For classifying the long term stability of the optical performance on $\alpha_s$ and $\varepsilon_t$ the performance criterion (PC) as defined by the international energy agency (IEA) was applied:

$$PC = -\Delta\alpha_s + 0{,}5\Delta\varepsilon_t \qquad (3)$$

where the change in solar absorptance $\Delta\alpha_s$ is defined as

$$\Delta\alpha_s = \alpha_{s,t} - \alpha_{s,i} \qquad (4)$$

with $\alpha_{s,t}$ corresponding to the value of solar absorptance of the treated samples and with $\alpha_{s,i}$ corresponding to the solar absorptance of the untreated reference samples.

The change in thermal emittance $\Delta\varepsilon_t$ is defined as

$$\Delta\varepsilon_t = \varepsilon_{t,t} - \varepsilon_{t,i} \qquad (5)$$

with $\varepsilon_{t,t}$ corresponding to the value of thermal emittance of the treated samples at the actual time of the test and with $\varepsilon_{t,i}$ corresponding to the thermal emittance of the untreated reference samples.

According to IEA, a value of PC should generally not exceed 0.05 after climate treatment.

The absorptance $\alpha_s$, the emittance $\varepsilon_t$ and the performance criterion (PC) was determined for the samples using the equations (1) - (5). These results and the reflectance measurements are presented below for the heat treated and the condensation tested samples respectively.

Optical characterization results for heat treated samples

Figure 2a shows the reflectance responses of the heat treated sample of G2 SS SiO$_2$ and the untreated reference sample G2 SS SiO$_2$ ref.

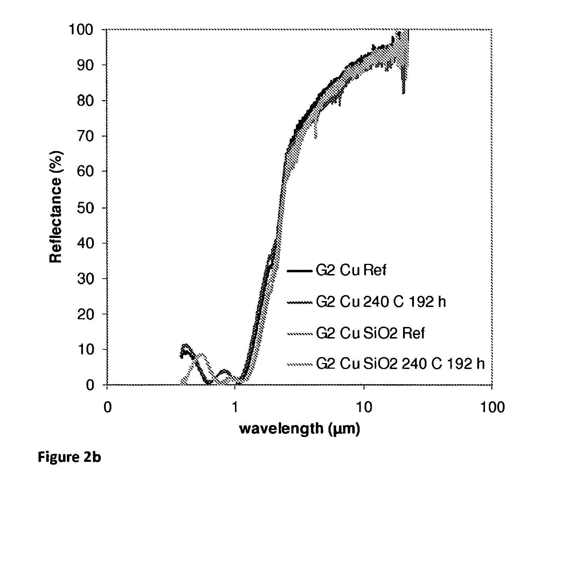

Figure 2b shows the reflectance responses of the heat treated sample of G2 Cu SiO$_2$ and the untreated reference sample G2 Cu SiO$_2$ ref.

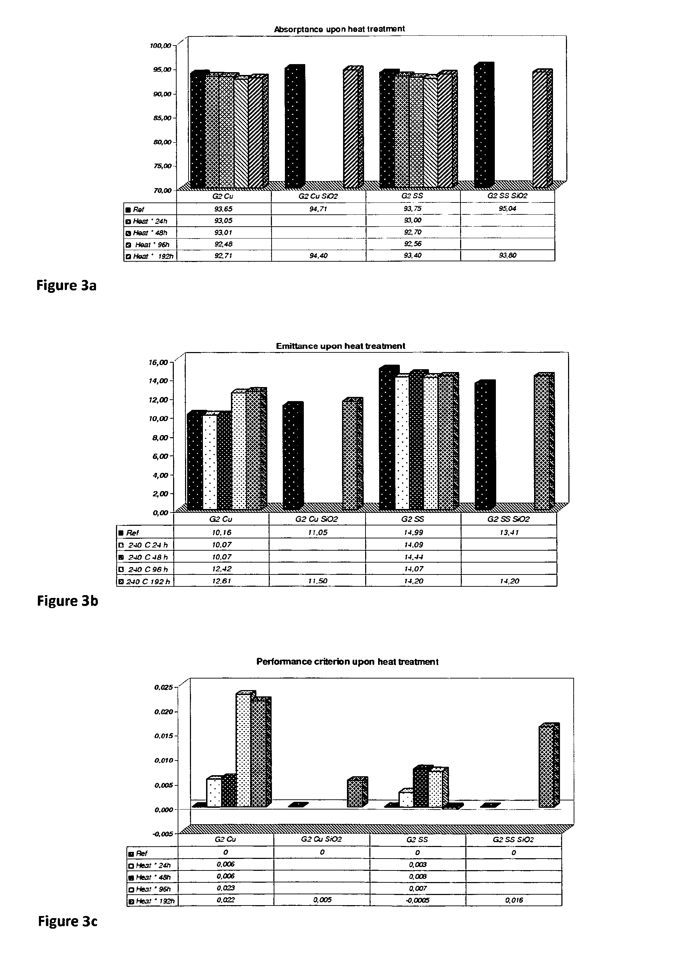

No significant change of in the reflectance response between the untreated sample (Ref) and the treated samples can be seen in figures 3a and 3b. Consequently, no significant deterioration of the heat treated samples has occurred.

Figure 3a is a bar diagram which shows the absorptance $\alpha_s$ for heat treated sample G2 Cu SiO$_2$ and for reference sample G2 Cu SiO$_2$ ref. Figure 3a also shows the absorptance $\alpha_s$ for heat treated sample G2 SS SiO$_2$ and reference sample G2 SS SiO$_2$ ref. Figure 3a also shows the results for G2 Cu and G2 SS. These materials will be discussed under figure 3c. Regarding the inventive material, G2 Cu SiO$_2$ and G2 SS SiO$_2$, it is apparent from figure 3a that for both types of substrates (SS) and (Cu) there is no significant difference in absorptance between the heat treated samples and the untreated reference samples.

Figure 3b is a bar diagram which shows the emittance $\varepsilon_t$ for heat treated sample G2 Cu SiO$_2$ and reference sample G2 Cu SiO$_2$ ref. Figure 3b also shows the emittance $\varepsilon_t$ for heat treated sample G2 SS SiO$_2$ and reference sample G2 SS SiO$_2$ ref. Materials G2 Cu and G2 SS will be discussed under figure 3c. It is apparent from figure 3b that for both types of substrates (SS) and (Cu) there is no significant difference in emittance between the heat treated samples and the untreated reference samples of the inventive material.

The changes in optical performance for the heat treated samples are presented by the performance criterion PC in Figure 3c. It is clear from figure 3c that both samples of the inventive material are below the criterion limit of 0,05. Sample G2 Cu SiO$_2$ has a performance criterion value of 0,005 and sample G2 SS SiO$_2$ has a performance criterion value of 0,016. Hence, no significant deterioration of the optical performance has occurred in the heat treated samples and they are consequently exhibiting good heat resistance.

When the performance criterion of the samples G2 SS SiO$_2$ and G2 Cu SiO$_2$ is compared with the samples G2 Cu and G2 SS (without Si02 layer) it is further clear that the performance criterion upon heat treatment for copper substrates is improved by the Si02 layer.

Optical characterization results for samples subjected to condensation test.

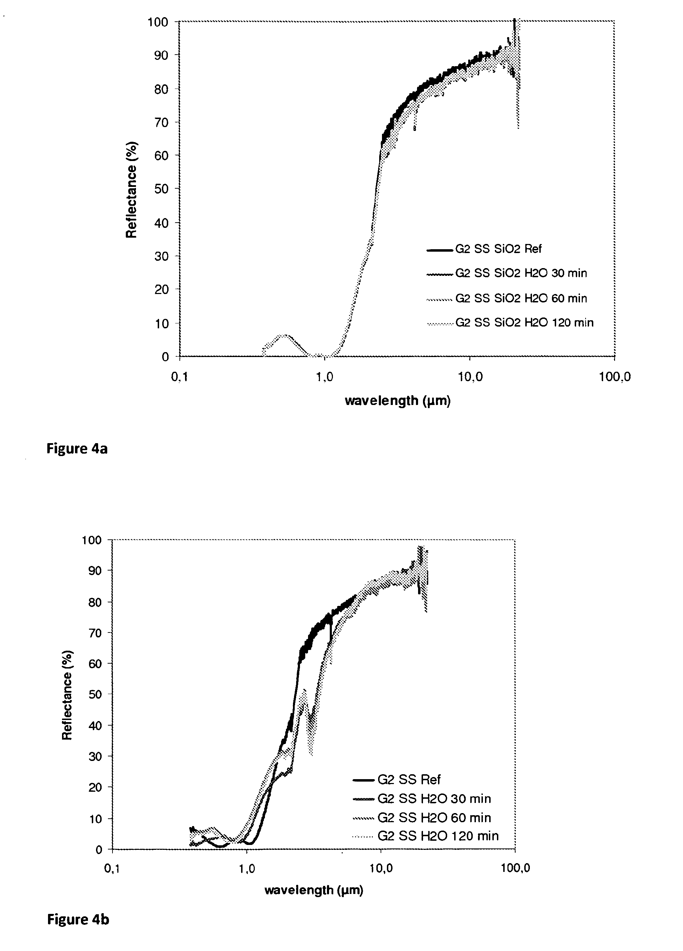

Figure 4a shows the reflectance response from samples of G2 SS SiO$_2$ that were treated for 30, 60 and 120 minutes and the reflectance response from the untreated reference sample G2 SS SiO$_2$ Ref.

Figure 4b shows the reflectance response from samples of G2 SS, hence samples without SiO$_2$ layer, that were treated for 30, 60 and 120 minutes and the reflectance response from the untreated reference sample G2 SS Ref.

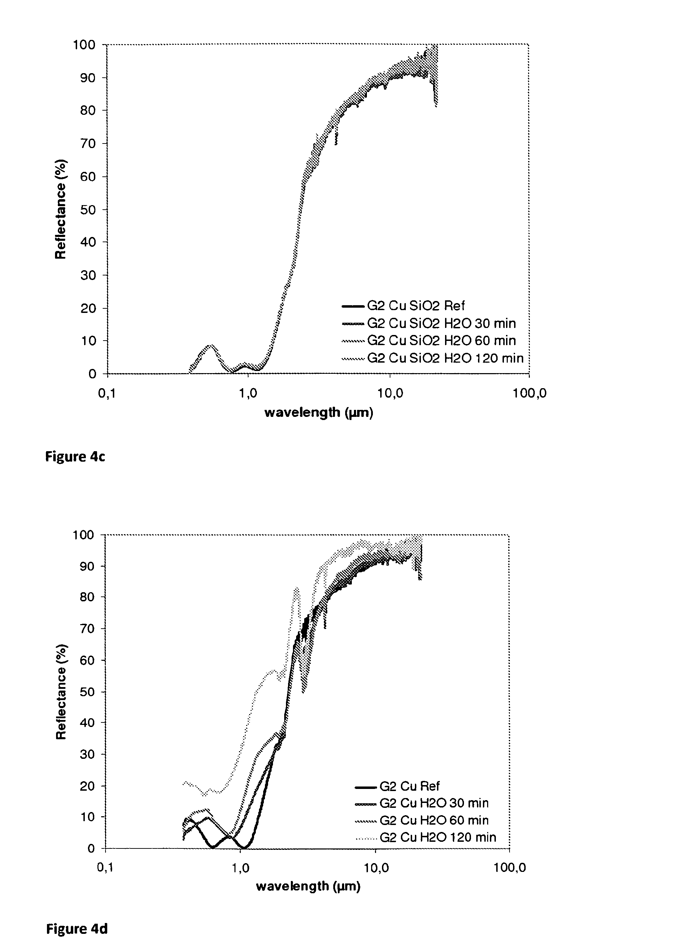

Figure 4c shows the reflectance response from samples of G2 Cu SiO$_2$ that were treated for 30, 60 and 120 minutes and the reflectance response from the untreated reference sample G2 Cu SiO$_2$ Ref.

Figure 4d shows the reflectance response from samples of G2 Cu (without SiO$_2$) that were treated for 30, 60 and 120 minutes and the reflectance response from the untreated reference sample G2 SS Ref.

In figure 4b and figure 4d, which shows the samples without a SiO$_2$ layer, a typical hygroscopic response is shown around 3 nm for both substrates. This can be seen by the sharp dip in the reflectance response around 3 nm. For the Cu substrate, see figure 4d , the response became worse for wavelengths up to 2 nm, this is seen in the higher overall reflectance indicating a change in the multilayer structure. After 120 min of condensation treatment the absorber surface properties are deteriorated in the entire spectrum. In comparison with figures 4a and 4c, which shows the results from samples having a multilayer structure including the Si02 layer, it is clear that the reflectance response remain unaffected upon the different lengths of condensation treatment. The typical hygroscopic behaviour seen in figures 4b and 4d is not visible at all. Hence the Si02 layer increases the resistance to humidity in the multilayer structure. It should also be noted that when the condensation treated samples of G2 Cu SiO$_2$ and G2 SS SiO$_2$ are compared with the untreated reference samples G2 Cu SiO$_2$ ref and G2 SS SiO$_2$ ref, no significant difference can be noted between condensation tested samples and the reference samples.

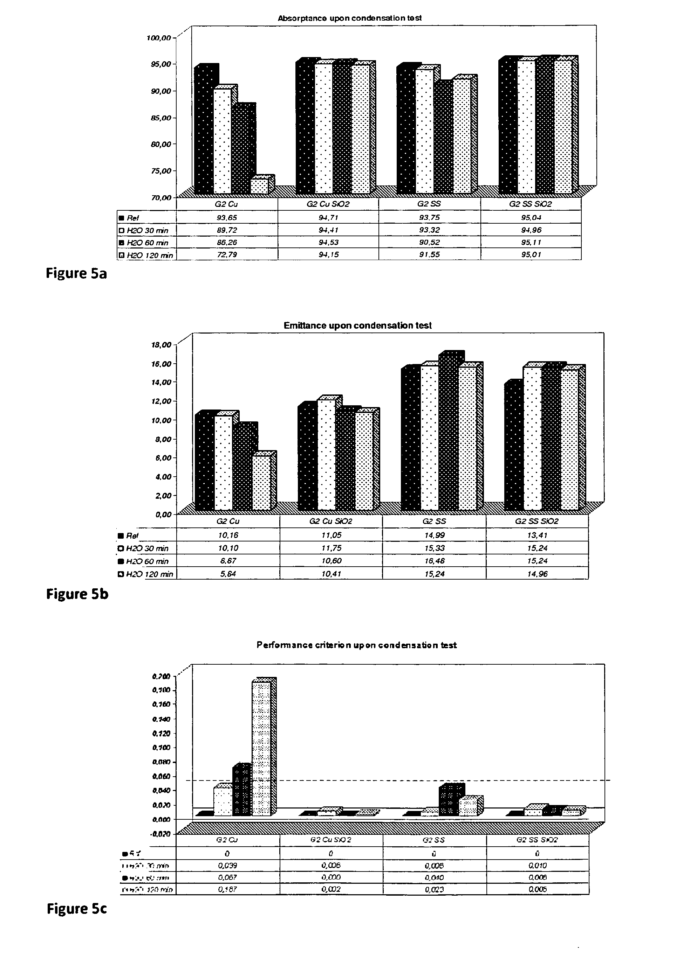

Figure 5a is a bar diagram which shows the absorptance $\alpha_s$ for samples of G2 Cu SiO$_2$ that were condensation tested for 30, 60 and 120 minutes as well as reference sample G2 Cu SiO$_2$ ref. Figure 5a also shows the absorptance $\alpha_s$ for condensation tested samples of G2 SS SiO$_2$ and reference sample G2 SS SiO$_2$ ref. Figure 5a further shows the absorptance of materials G2 Cu and G2 SS. These materials will be discussed under figure 5c. It is apparent from figure 5a that for both types of substrates (SS) and (Cu) there is no significant difference in absorptance between the condensation tested samples and the untreated reference samples of the inventive material. This is true for all three testing periods, 30, 60 and 120 minutes.

Figure 5b is a bar diagram which shows the emittance $\varepsilon_t$ for samples of G2 Cu SiO$_2$ that were condensation tested for 30, 60 and 120 minutes as well as the emittance for reference sample G2 Cu SiO$_2$ ref. Figure 5b also shows the emittance $\varepsilon_t$ for samples of G2 SS SiO$_2$ that were condensation tested for 30, 60 and 120 minutes as well as the emittance for reference sample G2 SS SiO$_2$ ref. Figure 5b shows that for both types of substrates (SS) and (Cu) there is no significant difference in emittance between the condensation tested samples and the untreated reference samples of the inventive materials. Hence, both the materials G2 SS SiO$_2$ and G2 Cu SiO$_2$ show good humidity resistance.

The changes in optical performance are presented by the performance criterion PC, see Figure 5c. As seen in figure 5c both materials G2 SS SiO$_2$ and G2 Cu SiO$_2$ resist the treatment well and are all clearly below the criterion limit of 0,05. When the performance criterion of samples of G2 Cu and G2 SS are compared with the samples of G2 Cu SiO$_2$ and G2 Cu SiO$_2$ it is clear that the performance criterion for both types of substrates benefits from the additional Si02 layer.

To summarize, the above results show that the optical performance of the heat treated and the condensation tested samples remain well below the IEA performance criterion of 0,05. This proves that the inventive solar thermal absorber material has high resistance to both heat and moisture induced corrosion.

**Claims**

1. A solar thermal absorber material (10) comprising:

   a multilayer structure (30) for absorbing solar light;
   a metallic substrate (20) for conducting heat from said multilayer structure (30), **characterized in that** said multilayer structure 30), in order from said substrate (20), at least comprises:

   a first layer (100) of Al$_2$O$_3$;
   a second layer (200) of Mo;
   a third layer (300) of Al$_2$O$_3$;
   an uppermost layer (700) of SiO$_2$.

2. The solar thermal absorber material (10) according to claim 1, wherein said multilayer structure 30), in order from said substrate (20), comprises:

   a first layer (100) of Al$_2$O$_3$ having a thickness of 28 - 89 nm;

a second layer (200) of Mo having a thickness of 16 - 30 nm;
a third layer (300) of $Al_2O_3$ having a thickness of 39 - 74 nm;
an uppermost layer (700) of $SiO_2$ having a thickness of 39 - 74 nm;

wherein the thickness of the layers is selected such that the ratio of absorptance/emittance is $\geq 80/\leq 20$.

3.  The solar thermal absorber material (10) according to claim 1, wherein said multilayer structure (30), in order from said substrate (20), at least comprises:

    a first layer (100) of $Al_2O_3$;
    a second layer (200) of Mo;
    a third layer (300) of $Al_2O_3$;
    a fourth layer (500) of Mo;
    a fifth layer (600) of $Al_2O_3$;
    an uppermost layer (700) of $SiO_2$

4.  The solar thermal absorber material (10) according to claim 3, wherein said multilayer structure (30), in order from said substrate (20), comprises:

    a first layer (100) of $Al_2O_3$ having a thickness of 10 - 240 nm;
    a second layer (200) of Mo having a thickness of 8 - 120 nm;
    a third layer (300) of $Al_2O_3$ having a thickness of 25 - 105 nm;
    a fourth layer (500) of Mo having a thickness of 3-60 nm;
    a fifth layer (600) of $Al_2O_3$ having a thickness of 15-100 nm;
    an uppermost layer (700) of $SiO_2$ having a thickness of 10 - 160 nm, wherein the thickness of the layers is selected such that the ratio of absorptance/emittance is $\geq 90/\leq 10$.

5.  The solar thermal absorber material (10) according to claim 3, wherein said multilayer structure (30), in order from said substrate (20), comprises:

    a first layer (100) of $Al_2O_3$;
    a second layer (200) of Mo;
    a third layer (300) of $Al_2O_3$;
    a fourth layer (400) of $Al_2O_3$,
    a fifth layer (500) of Mo;
    a sixth layer (600) of $Al_2O_3$;
    an uppermost layer (700) of $SiO_2$

6.  The solar thermal absorber material (10) according to claim 5, wherein said multilayer structure 30), in order from said substrate (20), comprises:

    a first layer (100) of $Al_2O_3$ having a thickness of 10 - 240 nm;
    a second layer (200) of Mo having a thickness of 8 - 120 nm;
    a third layer (300) of $Al_2O_3$;
    a fourth layer (400) of $Al_2O_3$,
    wherein the total thickness of said third and fourth layer is 25 - 105 nm;
    a fifth layer (500) of Mo having a thickness of 3-60 nm;
    a sixth layer (600) of $Al_2O_3$ having a thickness of 15-100 nm;
    an uppermost layer (700) of $SiO_2$ having a thickness of 10 -160 nm, wherein the thickness of the layers is selected such that the ratio of absorptance/emittance is $\geq 90/\leq 10$.

7.  The solar thermal absorber material (10) according to claim 6, wherein:

    the first layer (100) has a thickness of 45 - 100 nm;
    the second layer (200) has a thickness of 15 - 33 nm;
    the third layer (300) and the fourth layer (400) has a total thickness 38 - 83 nm;
    the fifth layer (500) has a thickness of 8 - 16 nm;
    the sixth layer (600) has a thickness of 34 - 75 nm;

the uppermost layer (700) of $SiO_2$ has a thickness of 38 - 83 nm.

8. The solar thermal absorber material (10) according to claim 7, wherein:

the first layer (100) has a thickness of 60 nm;
the second layer (200) has a thickness of 20 nm;
the third layer (300) and the fourth layer (400) has a total thickness of 50 nm;
the fifth layer (500) has a thickness of 10 nm;
the sixth layer (600) has a thickness of 75 nm;
the uppermost layer (700) of $SiO_2$ has a thickness of 50 nm.

9. The solar thermal absorber material (10) according to any of the preceding claims, wherein the thickness of the uppermost layer (700) of $SiO_2$ is greater than the thickness of the underlying layer (300), (600) of $Al_2O_3$.

10. The solar thermal absorber material (10) according to claim 8, wherein:

the sixth layer (600) has a thickness of 45 nm.

11. The solar thermal absorber material (10) according to any of claims 3 -11, wherein the thickness of the molybdenum layers (200), (500) are selected such that gradient of Mo concentration is achieved in the multilayer structure, wherein said gradient decreases towards the uppermost layer (700) of $SiO_2$.

12. The solar thermal absorber material according to claim 12, wherein the thickness of the molybdenum layer closest to the substrate (200) is approximately twice as thick as the uppermost molybdenum layer (500).

13. The solar thermal absorber material (10) according to claim 13, wherein:

the first layer (100) has a thickness of 60 nm;
the second layer (200) has a thickness of 12 - 42 nm;
the third layer (300) and the fourth layer (400) has a total thickness of 50 nm;
the fifth layer (500) has a thickness of 6 - 21 nm;
the sixth layer (600) has a thickness of 45 nm;
the uppermost layer (700) of $SiO_2$ has a thickness of 50 nm;

14. The solar thermal absorber material (10) according to any of the preceding claims, wherein the total thickness of the multilayer structure is less than 300 nm.

15. The solar thermal absorber material (10) according to any of the preceding claims, wherein the substrate is a strip material selected from the group of stainless steel, copper and aluminium.

**Patentansprüche**

1. Solarthermisches Absorbermaterial (10) umfassend:

eine mehrschichtige Struktur (30) zum Absorbieren von Sonnenlicht,
ein metallisches Substrat (20) zum Leiten von Wärme von der mehrschichtigen Struktur (30),

**dadurch gekennzeichnet, dass** die mehrschichtige Struktur (30) der Reihe nach, ausgehend von dem Substrat (20), zumindest umfasst:

eine erste Schicht (100) aus $Al_2O_3$,
eine zweite Schicht (200) aus Mo,
eine dritte Schicht (300) aus $Al_2O_3$,
eine oberste Schicht (700) aus $SiO_2$.

2. Solarthermisches Absorbermaterial (10) nach Anspruch 1, wobei die mehrschichtige Struktur (30) der Reihe nach, ausgehend von dem Substrat (20), umfasst:

eine erste Schicht (100) aus $Al_2O_3$, die eine Stärke von 28 - 89 nm hat,
eine zweite Schicht (200) aus Mo, die eine Stärke von 16 - 30 nm hat,
eine dritte Schicht (300) aus $Al_2O_3$, die eine Stärke von 39 - 74 nm hat,
eine oberste Schicht (700) aus $SiO_2$, die eine Stärke von 39 - 74 nm hat,

wobei die Stärke der Schichten so gewählt ist, dass das Verhältnis von Absorption/Emission $\geq 80 / \leq 20$ ist.

3. Solarthermisches Absorbermaterial (10) nach Anspruch 1, wobei die mehrschichtige Struktur (30) der Reihe nach, ausgehend von dem Substrat (20), zumindest umfasst:

eine erste Schicht (100) aus $Al_2O_3$,
eine zweite Schicht (200) aus Mo,
eine dritte Schicht (300) aus $Al_2O_3$,
eine vierte Schicht (500) aus Mo,
eine fünfte Schicht (600) aus $Al_2O_3$,
eine oberste Schicht (700) aus $SiO_2$.

4. Solarthermisches Absorbermaterial (10) nach Anspruch 3, wobei die mehrschichtige Struktur (30) der Reihe nach, ausgehend von dem Substrat (20), umfasst:

eine erste Schicht (100) aus $Al_2O_3$, die eine Stärke von 10 - 240 nm hat,
eine zweite Schicht (200) aus Mo, die eine Stärke von 8 - 120 nm hat,
eine dritte Schicht (300) aus $Al_2O_3$, die eine Stärke von 25 - 105 nm hat,
eine vierte Schicht (500) aus Mo, die eine Stärke von 3 - 60 nm hat,
eine fünfte Schicht (600) aus $Al_2O_3$, die eine Stärke von 15 - 100 nm hat,
eine oberste Schicht (700) aus $SiO_2$, die eine Stärke von 10 - 160 nm hat, wobei die Stärke der Schichten so gewählt ist, dass das Verhältnis von Absorption/Emission $\geq 90 / \leq 10$ ist.

5. Solarthermisches Absorbermaterial (10) nach Anspruch 3, wobei die mehrschichtige Struktur (30) der Reihe nach, ausgehend von dem Substrat (20), umfasst:

eine erste Schicht (100) aus $Al_2O_3$,
eine zweite Schicht (200) aus Mo,
eine dritte Schicht (300) aus $Al_2O_3$,
eine vierte Schicht (400) aus $Al_2O_3$,
eine fünfte Schicht (500) aus Mo,
eine sechste Schicht (600) aus $Al_2O_3$,
eine oberste Schicht (700) aus $SiO_2$.

6. Solarthermisches Absorbermaterial (10) nach Anspruch 5, wobei die mehrschichtige Struktur (30) der Reihe nach, ausgehend von dem Substrat (20), umfasst:

eine erste Schicht (100) aus $Al_2O_3$, die eine Stärke von 10 - 240 nm hat,
eine zweite Schicht (200) aus Mo, die eine Stärke von 8 - 120 nm hat,
eine dritte Schicht (300) aus $Al_2O_3$,
eine vierte Schicht (400) aus $Al_2O_3$,
wobei die Gesamtstärke der dritten und vierten Schicht 25 - 105 nm ist,
eine fünfte Schicht (500) aus Mo, die eine Stärke von 3 - 60 nm hat,
eine sechste Schicht (600) aus $Al_2O_3$, die eine Stärke von 15 - 100 nm hat,
eine oberste Schicht (700) aus $SiO_2$, die eine Stärke von 10 - 160 nm hat, wobei die Stärke der Schichten so gewählt ist, dass das Verhältnis von Absorption/Emission $\geq 90 / \leq 10$ ist.

7. Solarthermisches Absorbermaterial (10) nach Anspruch 6, wobei:

die erste Schicht (100) eine Stärke von 45 - 100 nm hat,
die zweite Schicht (200) eine Stärke von 15 - 33 nm hat,
die dritte Schicht (300) und die vierte Schicht (400) eine von Gesamtstärke 38 - 83 nm haben,
die fünfte Schicht (500) eine Stärke von 8 - 16 nm hat,

die sechste Schicht (600) eine Stärke von 34 - 75 nm hat,
die oberste Schicht (700) aus SiO$_2$ eine Stärke von 38 - 83 nm hat.

8. Solarthermisches Absorbermaterial (10) nach Anspruch 7, wobei:

die erste Schicht (100) eine Stärke von 60 nm hat,
die zweite Schicht (200) eine Stärke von 20 nm hat,
die dritte Schicht (300) und die vierte Schicht (400) eine Gesamtstärke von 50 nm haben,
die fünfte Schicht (500) eine Stärke von 10 nm hat,
die sechste Schicht (600) eine Stärke von 75 nm hat,
die oberste Schicht (700) eine Stärke von 50 nm hat.

9. Solarthermisches Absorbermaterial (10) nach einem der vorangehenden Ansprüche, wobei die Stärke der obersten Schicht (700) aus SiO$_2$ größer ist als die Stärke der darunterliegenden Schicht (300), (600) aus Al$_2$O$_3$.

10. Solarthermisches Absorbermaterial (10) nach Anspruch 8, wobei:

die sechste Schicht (600) eine Stärke von 45 nm hat.

11. Solarthermisches Absorbermaterial (10) nach einem der Ansprüche 3 bis 10, wobei die Stärken der Molybdänschichten (200), (500) so gewählt sind, dass ein Gradient der Mo-Konzentration in der mehrschichtigen Struktur verwirklicht wird, wobei der Gradient zur obersten Schicht (700) aus SiO$_2$ hin abnimmt.

12. Solarthermisches Absorbermaterial nach Anspruch 11, wobei die Stärke der Molybdänschicht, welche dem Substrat (200) am nächsten ist, ungefähr zweimal so dick wie die oberste Molybdänschicht (500) ist.

13. Solarthermisches Absorbermaterial (10) nach Anspruch 12, wobei:

die erste Schicht (100) eine Stärke von 60 nm hat,
die zweite Schicht (200) eine Stärke von 12 - 42 nm hat,
die dritte Schicht (300) und die vierte Schicht (400) eine Gesamtstärke von 50 nm haben,
die fünfte Schicht (500) eine Stärke von 6 - 21 nm hat,
die sechste Schicht (600) eine Stärke von 45 nm hat,
die oberste Schicht (700) aus SiO$_2$ eine Stärke von 50 nm hat.

14. Solarthermisches Absorbermaterial (10) nach einem der vorangehenden Ansprüche, wobei die Gesamtstärke der mehrschichtigen Struktur geringer als 300 nm ist.

15. Solarthermisches Absorbermaterial (10) nach einem der vorangehenden Ansprüche, wobei das Substrat ein Streifenmaterial ist, ausgewählt aus der Gruppe aus rostfreiem Edelstahl, Kupfer und Aluminium.

## Revendications

1. Un matériau absorbeur thermique solaire (10) comprenant :

- une structure multicouche (30) pour absorber la lumière solaire ;
- un substrat métallique (20) pour conduire de la chaleur de ladite structure multicouche (30),

**caractérisé en ce que** ladite structure multicouche 30), comprend successivement depuis ledit substrat (20), au moins :

- une première couche (100) de Al$_2$O$_3$ ;
- une seconde couche (200) de Mo ;
- une troisième couche (300) de Al$_2$O$_3$ ;
- une couche supérieure (700) de SiO$_2$.

2. Le matériau absorbeur thermique solaire (10) selon la revendication 1, dans lequel ladite structure multicouche (30),

comprend successivement depuis ledit substrat (20):

- une première couche (100) de $Al_2O_3$ ayant une épaisseur de 28 à 89 nm;
- une seconde couche (200) de Mo ayant une épaisseur de 16 à 30 nm;
- une troisième couche (300) de $Al_2O_3$ ayant une épaisseur de 39 à 74 nm;
- une couche supérieure (700) de $SiO_2$ ayant une épaisseur de 39 à 74 nm; matériau dans lequel l'épaisseur des couches est choisie de telle sorte que le rapport absorptance/émittance est $\geq 80$ / $\leq 20$.

3. Le matériau absorbeur thermique solaire (10) selon la revendication 1, dans lequel ladite structure multicouche (30), comprend successivement depuis ledit substrat (20), au moins:

- une première couche (100) de $Al_2O_3$;
- une seconde couche (200) de Mo;
- une troisième couche (300) de $Al_2O_3$;
- une quatrième couche (500) de Mo;
- une cinquième couche (600) de $Al_2O_3$;
- une couche supérieure (700) de $SiO_2$.

4. Le matériau absorbeur thermique solaire (10) selon la revendication 3, dans lequel ladite structure multicouche (30) comprend, successivement depuis ledit substrat (20):

- une première couche (100) de $Al_2O_3$ ayant une épaisseur de 10 à 240 nm;
- une seconde couche (200) de Mo ayant une épaisseur de 8 à 120 nm;
- une troisième couche (300) de $Al_2O_3$ ayant une épaisseur de 25 à 105 nm;
- une quatrième couche (500) de Mo ayant une épaisseur de 3-60 nm;
- une cinquième couche (600) de $Al_2O_3$ ayant une épaisseur de 15-100 nm;
- une couche supérieure (700) de $SiO_2$ ayant une épaisseur de 10 à 160 nm, matériau dans lequel l'épaisseur des couches est choisie de telle sorte que le rapport absorptance/émittance est $\geq 90$ / $\leq 10$.

5. Le matériau absorbeur thermique solaire (10) selon la revendication 3, dans lequel ladite structure multicouche (30) comprend, successivement depuis ledit substrat (20) :

- une première couche (100) de $Al_2O_3$;
- une seconde couche (200) de Mo;
- une troisième couche (300) de $Al_2O_3$;
- une quatrième couche (400) de $Al_2O_3$,
- une cinquième couche (500) de Mo;
- une sixième couche (600) de $Al_2O_3$;
- une couche supérieure (700) de $SiO_2$

6. Le matériau absorbeur thermique solaire (10) selon la revendication 5, dans lequel ladite structure multicouche 30) comprend, successivement depuis ledit substrat:

- une première couche (100) de $Al_2O_3$ ayant une épaisseur de 10 à 240 nm;
- une seconde couche (200) de Mo ayant une épaisseur de 8 à 120 nm;
- une troisième couche (300) de $Al_2O_3$;
- une quatrième couche (400) de $Al_2O_3$,
matériau dans lequel l'épaisseur totale de ladite troisième et quatrième couche est de 25 à 105 nm;
- une cinquième couche (500) de Mo ayant une épaisseur de 3-60 nm;
- une sixième couche (600) de $Al_2O_3$ ayant une épaisseur de 15-100 nm;
- une couche supérieure (700) de $SiO_2$ ayant une épaisseur de 10 à 160 nm, matériau dans lequel l'épaisseur des couches est choisie de telle sorte que le rapport absorptance/émittance est $\geq 90$ / $\leq 10$.

7. Le matériau absorbeur thermique solaire (10) selon la revendication 6, dans lequel:

- la première couche (100) a une épaisseur de 45 à 100 nm;
- la seconde couche (200) a une épaisseur de 15 à 33 nm;
- la troisième couche (300) et la quatrième couche (400) a une épaisseur totale de 38 à 83 nm;

- la cinquième couche (500) a une épaisseur de 8 à 16 nm;
- la sixième couche (600) a une épaisseur de 34 à 75 nm;
- la couche supérieure (700) de $SiO_2$ a une épaisseur de 38 à 83 nm.

8. Le matériau absorbeur thermique solaire (10) selon la revendication 7, dans lequel:

    - la première couche (100) a une épaisseur de 60 nm;
    - la seconde couche (200) a une épaisseur de 20 nm;
    - la troisième couche (300) et la quatrième couche (400) a une épaisseur totale de 50 nm;
    - la cinquième couche (500) a une épaisseur de 10 nm;
    - la sixième couche (600) a une épaisseur de 75 nm;
    - la couche supérieure (700) de $SiO_2$ a une épaisseur de 50 nm.

9. Le matériau absorbeur thermique solaire (10) selon l'une quelconque des revendications précédentes, dans lequel l'épaisseur de la couche supérieure (700) de $SiO_2$ est supérieure à l'épaisseur de la couche sous-jacente (300) et (600) de $Al_2O_3$.

10. Le matériau absorbeur thermique solaire (10) selon la revendication 8, dans lequel la sixième couche (600) a une épaisseur de 45 nm.

11. Le matériau absorbeur thermique solaire (10) selon l'une quelconque des revendications 3-11, dans lequel l'épaisseur des couches de molybdène (200), (500) sont choisis de telle sorte que le gradient de concentration en Mo est réalisé dans la structure multicouche, dans lequel ledit gradient diminue en direction de la couche supérieure (700) de $SiO_2$.

12. Le matériau absorbeur solaire selon la revendication 12, dans lequel l'épaisseur de la couche de molybdène la plus proche du substrat (200) est environ deux fois plus épaisse que la couche de molybdène supérieure (500).

13. Le matériau absorbeur thermique solaire (10) selon la revendication 13, dans lequel:

    - la première couche (100) a une épaisseur de 60 nm;
    - la seconde couche (200) a une épaisseur de 12 à 42 nm;
    - la troisième couche (300) et la quatrième couche (400) ont une épaisseur totale de 50 nm;
    - la cinquième couche (500) a une épaisseur de 6 à 21 nm;
    - la sixième couche (600) a une épaisseur de 45 nm;
    - la couche supérieure (700) de $SiO_2$ a une épaisseur de 50 nm;

14. Le matériau absorbeur thermique solaire (10) selon l'une quelconque des revendications précédentes, dans lequel l'épaisseur totale de la structure multicouche est inférieure à 300 nm.

15. Le matériau absorbeur thermique solaire (10) selon l'une quelconque des revendications précédentes, dans lequel le substrat est un matériau en bande choisi dans le groupe comprenant l'acier inoxydable, le cuivre et l'aluminium.

**Figure1**

Figure 2a

**Figure 2b**

**Absorptance upon heat treatment**

| | G2 Cu | G2 Cu SiO2 | G2 SS | G2 SS SiO2 |
|---|---|---|---|---|
| ■ Ref | 93,65 | 94,71 | 93,75 | 95,04 |
| ▣ Heat * 24h | 93,05 | | 93,00 | |
| ▣ Heat * 48h | 93,01 | | 92,70 | |
| ▣ Heat * 96h | 92,48 | | 92,56 | |
| ▣ Heat * 192h | 92,71 | 94,40 | 93,40 | 93,80 |

**Figure 3a**

**Emittance upon heat treatment**

| | G2 Cu | G2 Cu SiO2 | G2 SS | G2 SS SiO2 |
|---|---|---|---|---|
| ■ Ref | 10,16 | 11,05 | 14,99 | 13,41 |
| ▣ 240 C 24 h | 10,07 | | 14,09 | |
| ▣ 240 C 48 h | 10,07 | | 14,44 | |
| ▣ 240 C 96 h | 12,42 | | 14,07 | |
| ▣ 240 C 192 h | 12,61 | 11,50 | 14,20 | 14,20 |

**Figure 3b**

**Performance criterion upon heat treatment**

| | G2 Cu | G2 Cu SiO2 | G2 SS | G2 SS SiO2 |
|---|---|---|---|---|
| ▣ Ref | 0 | 0 | 0 | 0 |
| ▣ Heat * 24h | 0,006 | | 0,003 | |
| ■ Heat * 48h | 0,006 | | 0,008 | |
| ▣ Heat * 96h | 0,023 | | 0,007 | |
| ▣ Heat * 192h | 0,022 | 0,005 | -0,0005 | 0,016 |

**Figure 3c**

**Figure 4a**

**Figure 4b**

**Figure 4c**

**Figure 4d**

**Absorptance upon condensation test**

| | G2 Cu | G2 Cu SiO2 | G2 SS | G2 SS SiO2 |
|---|---|---|---|---|
| ■ Ref | 93,65 | 94,71 | 93,75 | 95,04 |
| ☐ H2O 30 min | 89,72 | 94,41 | 93,32 | 94,96 |
| ■ H2O 60 min | 86,26 | 94,53 | 90,52 | 95,11 |
| ☐ H2O 120 min | 72,79 | 94,15 | 91,55 | 95,01 |

**Figure 5a**

**Emittance upon condensation test**

| | G2 Cu | G2 Cu SiO2 | G2 SS | G2 SS SiO2 |
|---|---|---|---|---|
| ■ Ref | 10,16 | 11,05 | 14,99 | 13,41 |
| ☐ H2O 30 min | 10,10 | 11,75 | 15,33 | 15,24 |
| ■ H2O 60 min | 8,87 | 10,60 | 16,48 | 15,24 |
| ☐ H2O 120 min | 5,64 | 10,41 | 15,24 | 14,96 |

**Figure 5b**

**Performance criterion upon condensation test**

| | G2 Cu | G2 Cu SiO2 | G2 SS | G2 SS SiO2 |
|---|---|---|---|---|
| ■ Ref | 0 | 0 | 0 | 0 |
| ☐ H2O 30 min | 0,039 | 0,006 | 0,008 | 0,010 |
| ■ H2O 60 min | 0,067 | 0,000 | 0,040 | 0,006 |
| ☐ H2O 120 min | 0,187 | 0,002 | 0,023 | 0,005 |

**Figure 5c**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1217315 A